# EUROPÄISCHE PATENTANMELDUNG

(11) **EP 0 827 057 A1**
(43) Veröffentlichungstag der Anmeldung: **04.03.1998**
(21) Anmeldenummer: 97110345.2
(22) Anmeldetag: 25.06.1997
(51) Int. Cl.: G05D 23/12, F24D 19/10

(54) **Thermostatventil**

(30) Priorität: 31.08.1996 DE 19635339
(71) Anmelder: Deutsches Zentrum für Luft- und Raumfahrt e.V., 53175 Bonn (DE)
(72) Erfinder: Farago, Zoltan, 74747 Ravenstein (DE); Adis, Erich, 74239 Hardthausen (DE); Buddenberg, Carl, 74219 Möckmühl (DE)
(74) Vertreter: Hoeger, Stellrecht & Partner

(57) **Zusammenfassung**

Um ein Thermostatventil zur Regelung des Massestroms in einem Heizkreis, der einen Heizungsvorlauf und einen Heizungsrücklauf aufweist, welches einen Ventilkörper umfaßt, der zur Steuerung des Massestroms in einer axialen Richtung beweglich ist, derart zu schaffen, daß der Massestrom von Heizwasser in einer Heizungsanlage so regelbar ist, daß die Restwärme eines Abgases der Brennstoffverbrennung nutzbar ist, wird vorgeschlagen, daß ein erster Temperaturfühler für die Raumtemperatur eines zu beheizenden Raums und ein zweiter Temperaturfühler für den Heizungsrücklauf vorgesehen sind und daß durch die gemeinsame Signalbeaufschlagung eines Ventilkörper-Steuerungsmittels durch den ersten und den zweiten Temperaturfühler die Bewegung des Ventilkörpers steuerbar ist.

## Beschreibung

Die Erfindung betrifft ein Thermostatventil zur Regelung des Massestroms in einem Heizkreis, der einen Heizungsvorlauf und einen Heizungsrücklauf aufweist, welches einen Ventilkörper umfaßt, der zur Steuerung des Massestroms in einer axialen Richtung beweglich ist.

Derartige Thermostatventile sind aus dem Stand der Technik bekannt.

Bei einer herkömmlichen Heizungsanlage dienen Thermostatventile dazu, den Massestrom des Heizwassers in einem Heizungsvorlauf zu regeln, so daß die Raumtemperatur in einen beheizten Raum auf einem vorgegebenen konstanten Sollwert liegt.

Bei einer Heizungsanlage, die die restliche fühlbare und die latente Wärme (Restwärme) eines Abgases eines Brennstoffs nutzt, nimmt das Heizwasser in einem Heizungsrücklauf in einem Restwärmetauscher Wärme aus dem Abgas auf. Diese Wärmeaufnahme geschieht dadurch, daß zumindest teilweise im Abgas enthaltener Wasserdampf zu einem Kondensat kondensiert und die dabei frei werdende latente Wärme an das Heizwasser abgegeben wird. Derartige Verfahren sind jedoch nur wirksam, wenn die Temperatur des Heizwassers im Heizungsrücklauf genügend unterhalb einer Abgastaupunkttemperatur des Abgases liegt.

Für das Abgas einer Ölheizung liegt die Abgastaupunkttemperatur beispielsweise bei 50° C, für das Abgas einer Gasheizung bei etwa 55° C. Demnach muß bei solch einer Heizungsanlage der Massestrom so geregelt werden, daß sich in einem beheizten Raum die gewünschte Raumtemperatur ergibt und die Temperatur des Heizwassers im Heizungsrücklauf keine zu hohe Temperatur aufweist.

Der vorliegenden Erfindung liegt daher die Aufgabe zugrunde, ein Thermostatventil der eingangs genannten Art zu schaffen, so daß der Massestrom von Heizwasser in einer Heizungsanlage so regelbar ist, daß die Restwärme eines Abgases der Brennstoffverbrennung nutzbar ist.

Diese Aufgabe wird bei der vorliegenden Erfindung mit den Merkmalen des Oberbegriffes von Anspruch 1 dadurch gelöst, daß ein erster Temperaturfühler für die Raumtemperatur eines zu beheizenden Raums und ein zweiter Temperaturfühler für den Heizungsrücklauf vorgesehen sind und daß durch die gemeinsame Signalbeaufschlagung eines Ventilkörper-Steuerungsmittels durch den ersten und den zweiten Temperaturfühler die Bewegung des Ventilkörpers steuerbar ist.

Das erfindungsgemäße Thermostatventil hat den Vorteil, daß mit einem Gerät sowohl die Raumtemperatur in einem beheizten Raum als auch die Temperatur des Heizwassers in dem Heizungsrücklauf zur Regelung des Massestroms im Heizkreis berücksichtigbar sind, während bisher durch ein Thermostatventil gemäß dem Stand der Technik nur die Raumlufttemperatur zur Regelung des Massestroms berücksichtigt wurde. Das erfindungsgemäße Konzept bietet damit den Vorteil, daß eine genauere, die Raumtemperatur und die Temperatur des Heizwassers im Rücklauf berücksichtigende, Regelung ermöglicht ist, daß Anschaffungskosten niedriger sind, da jeweils nur ein Thermostatventil gemeinsam für Vorlauf und Rücklauf vorgesehen werden muß und daß die Montage vereinfacht ist, da das Thermostatventil jeweils nur einmal an einen Heizkörper der Heizungsanlage montiert werden muß.

In einer bevorzugten Ausführungsform ist es vorgesehen, daß der Temperaturfühler für den Heizungsrücklauf ein Fernfühler ist. Dadurch läßt sich die Temperatur des Heizwasser im Heizungsrücklauf genau und auf einfache Weise ermitteln.

Der Temperaturfühler für die Raumtemperatur kann ein Direktfühler oder ein Fernfühler sein. Durch den Direktfühler kann beispielsweise die Lufttemperatur am Thermostatventil ermittelt werden oder durch einen Fernfühler die Temperatur an einem ausgewählten Ort eines beheizten Raums.

Auf konstruktiv besonders einfache Weise läßt sich das erfindungsgemäße Konzept dadurch realisieren, daß das Ventilkörper-Steuerungsmittel ein thermisches Ausdehnungselement ist, welches durch den ersten und den zweiten Temperaturfühler mit Wärme beaufschlagt wird. Dadurch läßt sich die Bewegung des Ventilkörpers direkt mittels thermischer Ausdehnung steuern.

Besonders vorteilhaft ist es dann, wenn das thermische Ausdehnungselement einen ersten Ausdehnungskörper umfaßt, welcher mit dem ersten Temperaturfühler verbunden ist und einen zweiten Ausdehnungskörper umfaßt, der mit dem zweiten Temperaturfühler verbunden ist. Dadurch ergeben sich umfangreiche Möglichkeiten zur Steuerung der Bewegung des Ventilkörpers. Insbesondere lassen Sich dann die Soll-Temperatur für das Heizwasser im Heizungsvorlauf und die Soll-Temperatur für das Heizwasser im Heizungsrücklauf auf einfache Weise unabhängig voneinander einstellen.

In einer Variante einer Ausführungsform sind der erste und der zweite Ausdehnungskörper so angeordnet, daß der Effekt der Wärmebeaufschlagung des thermischen Ausdehnungselements durch den ersten Temperaturfühler und der Effekt der Wärmebeaufschlagung des thermischen Ausdehnungselements durch den zweiten Temperaturfühler für die Bewegung des Ventilkörpers additiv ist. Es kann dann beispielsweise erreicht werden, daß ein Ausdehnungskörper eine Notfunktion aufweist, in dem er so ausgelegt ist, daß er im wesentlichen dann wirksam wird, wenn ein bestimmter Grenzwert erreicht oder überschritten wird.

Bei einer vorteilhaften Variante einer Ausführungsform ist der erste Ausdehnungskörper und der zweite Ausdehnungskörper in Reihe hintereinander angeordnet.

Vorteilhafterweise sitzt dann zwischen dem ersten Ausdehnungskörper und dem zweiten Ausdehnungskörper ein kraftübertragendes Element, beispielsweise eine Feder. Dadurch läßt sich auf einfache Weise die Kraft, welche durch die thermische Ausdehnung des ersten Ausdehnungskörpers hervorgerufen wird, auf den zweiten Ausdehnungskörper und damit auf den Ventilkörper übertragen.

Bei einer vorteilhaften Ausführungsform ist es vorgesehen, daß die Bewegung des Ventilkörpers durch denjenigen Ausdehnungskörper, welcher eine stärkere Ausdehnungskraft erzeugt, steuerbar ist. Durch diese erfindungsgemäße Vorrichtung kann der Fall erfaßt werden, daß ein Steigen bzw. Absinken der Raumtemperatur und ein Fallen bzw. Steigen der Temperatur des Heizwassers im Heizungsrücklauf vorliegt und das erfindungsgemäße Thermostatventil auch in diesem Fall den Massestrom in der Heizungsanlage regeln kann.

Günstigerweise ist in diesem Fall ein kraftübertragendes Mittel, welches sowohl die Kraft des ersten Ausdehnungskörpers als auch die Kraft des zweiten Ausdehnungskörpers aufnehmen kann, von dem thermischen Ausdehnungselement auf den Ventilkörper vorgesehen.

In einer konstruktiv besonders einfachen Ausführungsform umfaßt das kraftübertragende Mittel einen verschieblichen Stempel, auf dessen Stempelboden durch den ersten und den zweiten Ausdehnungskörper eine Kraft ausübbar ist, so daß derjenige Ausdehnungskörper, welcher eine größere Kraft erzeugt, im wesentlichen die Bewegung des Stempels bewirkt.

Vorteilhafterweise ist es vorgesehen, daß der Stempel in seinem Zentrum eine Axialführung aufweist, so daß eine Verkantung des Stempels, welche beispielsweise durch seitliche Kräfte hervorgerufen werden könnte, vermieden ist. Es kann auch vorgesehen sein, daß der Stempel eine Axialführung in einem Umfangsbereich seines Stempelbodens aufweist.

In einer Variante einer Ausführungsform bilden der erste Ausdehnungskörper und der zweite Ausdehnungskörper mit ihrer hauptsächlichen Ausdehnungsrichtung jeweils einen Winkel zu einer Achse, welche in Bewegungsrichtung des Ventilkörpers liegt. Dadurch kann die Fläche des Stempelbodens des Stempels verringert werden.

In einer günstigen Variante einer Ausführungsform ist das kraftübertragende Mittel eine drehbar gelagerte Platte, durch welche die axiale Bewegung des Ventilkörpers mittels einer durch den ersten oder zweiten Ausdehnungskörper hervorgerufenen Drehmoments der Platte bewirkbar ist. Durch die drehbare Lagerung einer Platte kann auf Führungen zur Übertragung der thermischen Ausdehnung der Ausdehnungskörper auf den Ventilkörper verzichtet werden.

In einer konstruktiv besonders einfachen Ausführungsform ist es vorgesehen, daß die Kraftübertragung von dem ersten und dem zweiten Ausdehnungskörper auf den Ventilkörper jeweils mittels eines Hebels erfolgt.

In einer konstruktiv besonders einfachen Ausführungsform eines erfindungsgemäßen Thermostatventils sind der erste und der zweite Temperaturfühler hydraulisch miteinander verbunden, so daß eine Wärmebeaufschlagung des thermischen Ausdehnungselements durch die direkt Kombination zweier Temperaturmessungen erfolgt.

Besonders vorteilhaft ist es dann, wenn ein thermischer Ausdehnungskörper vorgesehen ist, der mit den hydraulisch verbundenen Temperaturfühlern in Verbindung steht und durch dessen thermische Ausdehnung eine axiale Bewegung des Ventilkörpers bewirkbar ist.

In einer konstruktiv besonders einfachen Variante einer Ausführungsform ist das Ventilkörper-Steuerungsmittel eine elektronische Verarbeitungseinheit, welche die axiale Bewegung des Ventilkörpers mit Hilfe von elektronischen Signalen des ersten und des zweiten Temperaturfühlers steuert. Dadurch ergeben sich umfangreiche Steuerungsmöglichkeiten, die insbesondere durch eine jeweilige Programmierung der elektronischen Verarbeitungseinheit wählbar sind.

In der Zeichnung zeigen:
- Fig. 1: ein erstes Ausführungsbeispiel einer erfindungsgemäßen Vorrichtung;
- Fig. 2: ein zweites Ausführungsbeispiel einer erfindungsgemäßen Vorrichtung;
- Fig. 3: ein drittes Ausführungsbeispiel einer erfindungsgemäßen Vorrichtung;
- Fig. 4: eine schematische Darstellung einer Variante eines Ausführungsbeispieles;
- Fig. 5: eine Variante eines Ausführungsbeispiels in schematischer Darstellung;
- Fig. 6: in schematischer Darstellung eine Variante eines Ausführungsbeispieles und
- Fig. 7: eine Variante eines Ausführungsbeispieles mit zwei Ausdehnungskörpern in schematischer Darstellung.

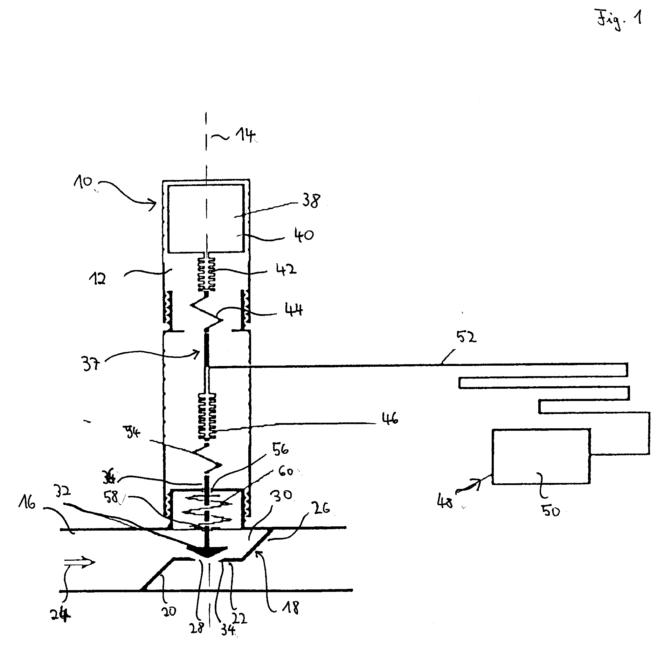

Bei einer Variante eines Ausführungsbeispieles weist das Thermostatventil, welches in Fig. 1 als Ganzes mit 10 bezeichnet wird, ein Gehäuse 12 auf. Eine Längsachse 14 dieses Gehäuses 12 ist senkrecht zu einer Leitung 16, welche eine Heizwasserleitung ist, wobei der Massestrom in dieser Heizwasserleitung durch das erfindungsgemäße Thermostatventil 10 geregelt wird. Bei der Heizwasserleitung 16 handelt es sich beispielsweise um einen Heizwasservorlauf einer Heizungsanlage.

In der Heizwasserleitung 16 ist eine Drosselbarriere 18 angeordnet, welche zwischen Innenwänden der Leitung 16 sitzt. Die Drosselbarriere 18 weist eine erste Flanke 20 auf, welche einen Winkel zu einer Flächennormale einer Innenwand der Leitung 16 bildet und die sich bevorzugterweise bis zum Zentrum der Leitung 16 erstreckt, so daß durch die Flanke 20 ein halber Querschnitt der Heizwasserleitung 16 gesperrt ist. An die Flanke 20 schließt sich ein Drosselbarrierenelement 22 an, welches parallel zur Richtung 24 des Heizwasser-Massestroms ist. Von dem Drosselbarrierenelement 22 verläuft eine zweite Flanke 26 zu einer Innenwand der Heizwasserleitung 16, durch die die zweite Querschnittshälfte der Leitung 16 gesperrt ist.

Das Drosselbarrierenelement 22 weist eine Öffnung 28 auf, deren Zentrum auf der Achse 14 liegt. Zwischen dem Drosselbarrierenelement 22 und der Innenwand der Heizwasserleitung 16, an welcher die zweite Flanke 26 anliegt, ist ein Kanal 30 gebildet, über den Heizwasser, welches in der Richtung 24 strömt, über die Öffnung 28 durch die Drosselbarriere 18 gelangen kann.

Der Querschnitt des Kanals 30 ist mittels des Thermostatventils 10 veränderbar, so daß dadurch der Massestrom in der Heizwasserleitung 16 steuerbar ist. Dazu weist das Thermostatventil 10 einen Ventilkörper 32 auf, der in axialer Richtung längs der Achse 14 bewegbar ist. Der Ventilkörper 32 hat bevorzugterweise die Form eines Kegels, wobei die Kegelspitze in Richtung der Innenwand der Leitung 16 zeigt, an welche die erste Flanke 20 anliegt.

Bevorzugterweise weist ein Rand der Öffnung 28 eine Abfasung 34 auf, welche an den Öffnungswinkel des Ventilkörper-Kegels 32 angepaßt ist, so daß, wenn der Ventilkörper in der Öffnung 28 sitzt, ein guter Verschluß der Öffnung 28 erreicht ist.

Der Ventilkörper ist an einer Ventilspindel 36 angeordnet, welche in Richtung der Achse 14 liegt, und deren in die Leitung 16 hineinreichender Teil eine Schieberwirkung hat, indem sie zusammen mit dem Ventilkörper den Querschnitt des Kanals 30 verengt.

Zur Steuerung der Bewegung des Ventilkörpers 32 längs der Achse 14 weist das Thermostatventil 10 ein thermisches Ausdehnungselement 37 auf. Dieses umfaßt ein in einem oberen Bereich des Gehäuses 12 angeordnetes thermisches Ausdehnungsgefäß 38, welches mit einem Ausdehnungsmedium gefüllt ist. Bei dem Ausdehnungsmedium handelt es sich um eine dampfförmige, flüssige oder feste Substanz, die sich bei Erwärmen ausdehnt.

Bei der in Fig. 1 gezeigten Variante eines Ausführungsbeispieles stellt das Ausdehnungsgefäß 38 selbst einen ersten Temperaturfühler 40 dar. Dieser Temperaturfühler 40 ermittelt beispielsweise eine Raumtemperatur, welche bei gegebener Außentemperatur durch die Temperatur des Heizwassers in einem Heizungsvorlauf, bestimmt ist.

Es kann auch vorgesehen sein, daß der Temperaturfühler 40 ein Fernfühler ist. Bei dieser Variante einer Ausführungsform ist das Ausdehnungsgefäß 40 an einem ausgewählten Ort eines beheizten Raums angeordnet und die Wärmeausdehnung des Ausdehnungsmediums wird mittels einer Kapillare zum Thermostatventil 10 übertragen.

Das Ausdehnungsgefäß 38 ist bei der in Fig. 1 gezeigten Variante mit einem Ausdehnungskörper 42 verbunden, durch welchen verursacht durch die Ausdehnung des Ausdehnungsmediums eine Kraft in axialer Richtung 14 ausgeübt wird.

Diese Kraft wird mittels eines kraftübertragenden Elements 44, beispielsweise einer Feder, an einen zweiten Ausdehnungskörper 46 übertragen. Der zweite Ausdehnungskörper 46 steht in Verbindung mit einem zweiten Temperaturfühler 48. In der in Fig. 1 gezeigten Variante ist dieser Temperaturfühler 48 ein Fernfühler für die Temperatur des Heizwassers in einem Heizungsrücklauf, dessen Ausdehnungsgefäß 50 außerhalb des Thermostatventils 10 angeordnet ist und wobei die Ausdehnung der Ausdehnungssubstanz in dem Ausdehnungsgefäß 50 mittels einer Kapillare 52 auf den Ausdehnungskörper 46 übertragen wird.

Ein kraftübertragendes Element 54, beispielsweise eine Feder, überträgt die durch die Ausdehnung des Ausdehnungsmediums in dem Ausdehnungsgefäß 50 hervorgerufene Kraft an dem Ausdehnungskörper 46 auf die Ventilspindel 36.

Die resultierende Kraft auf die Ventilspindel 36 setzt sich dadurch zusammen aus der Kraft, welche durch den Ausdehnungskörper 42 übertragen durch die Feder 44 auf den Ausdehnungskörper 46 ausgeübt wird, und aus der Kraft, die durch die Ausdehnung des Ausdehnungskörpers 46 selbst entsteht.

Die Ventilspindel 36 ist in einer axialen Führung 56 und 58 gelagert, wobei die axiale Führung 58 in einer Öffnung in einer Wand der Heizwasserleitung 16 sitzt. Dichtungen an der Führung 58 sorgen dafür, daß kein Heizwasser in das Thermostatventil 10 eindringen kann.

An der Ventilspindel 36 ist eine Feder 60 angeordnet, deren Federkraft in axialer Richtung 14 entgegen der Ausdehnungskraft wirkt und durch die eine Rückstellung des Ventilkörpers 32 bei einer Temperaturabsenkung bewirkt wird.

Bevorzugterweise sind die Federn 44 und 54 als harte Federn ausgebildet, so daß eine gute Kraftübertragung des Ausdehnungskörper auf die Ventilspindel erreicht ist und gleichzeitig verhindert wird, daß der Ventilkörper 32 mit zu großer Anpresskraft, welche Beschädigungen verursachen könnte, an das Drosselbarrierenelement 22 gedrückt wird.

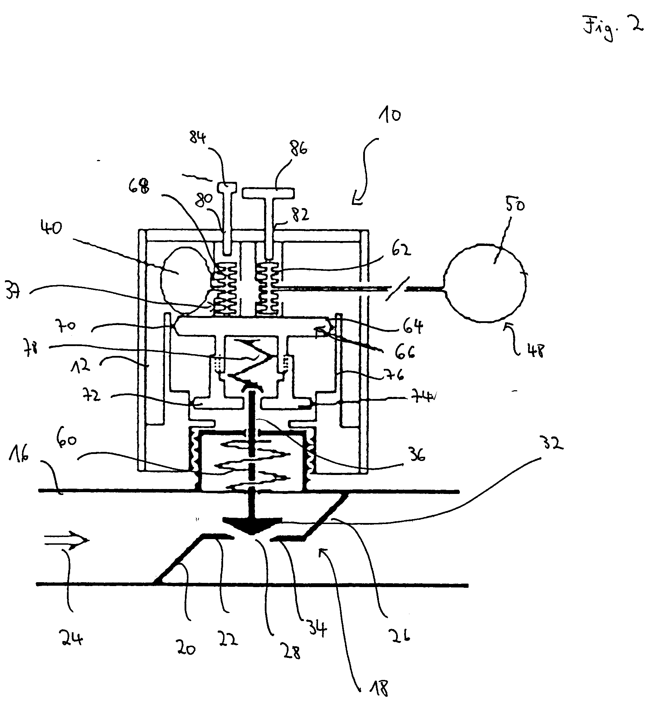

Bei einer Variante einer Ausführungsform, welche in Fig. 2 dargestellt ist, übt ein erster Ausdehnungskörper 62, welcher mit einem Fern-Temperaturfühler 48 in Verbindung steht, eine Kraft auf einen Stempelboden 64 eines Stempels 66 auf. Ein zweiter Ausdehnungskörper 68, welcher mit dem Temperaturfühler 40, der in der gezeigten Variante ein Direktfühler ist, in Verbindung steht, übt ebenfalls eine Kraft auf den Stempelboden 64 auf. Bei dieser Variante, bei der der erste Ausdehnungskörper 62 und der zweite Ausdehnungskörper 68 parallel zueinander angeordnet sind, ist diejenige Ausdehnungskraft durch denjenigen Ausdehnungskörper im wesentlichen wirksam, welcher die größere Ausdehnungslänge aufweist.

Der Stempel 66 ist axial verschieblich entlang der Achse 14 gelagert. Bei der in Fig. 2 gezeigten Variante weist der Stempel 66 dazu an einem Rand des Stempelbodens 64 eine Axialführung 70 und an einem Stempelträger 72, welcher dem Stempelboden 64 abgewandt angeordnet ist, Führungen 74 auf. Die Führungen 70 und 74 ermöglichen eine axiale Verschiebung des Stempels 66 in einem Stempellager 76. Die Kraft von dem Stempel 66 auf die Ventilspindel 36 wird mittels einer Feder 78 übertragen, welche zwischen einem dem Ventilkörper 32 abgewandten Ende der Ventilspindel 36 und einer der durch die Ausdehnungskraft der thermischen Ausdehnungskörper beaufschlagten Fläche abgewandtem Ende des Stempelbodens 64 sitzt.

An einem der Heizwasserleitung 16 abgewandten Ende des Gehäuses 12 sind Öffnungen 80 bzw. 82 für Justierelemente 84 bzw. 86 angeordnet. Durch die Justierelemente 84 bzw. 86 wird die Ausdehnung der Ausdehnungskörper 68 bzw. 62 in Richtung der Justierelemente 84 bzw. 86, bei denen es sich beispielsweise um Justierschrauben handeln kann, begrenzt, so daß damit die Kraft der Ausdehnungskörper 68 bzw. 62 auf den Stempel 66 einstellbar ist. Damit lassen sich die Soll-Temperaturen für das Heizwasser in dem Heizungsrücklauf, welche in der Fig. 2 gezeigten Variante durch den Temperaturfühler 48 gemessen wird, und die Temperatur des Heizwassers im Heizungsvorlauf, welche in der Fig. 2 gezeigten Variante über den Raumlufttemperaturfühler 40 ermittelt wird, auf die jeweiligen gewünschten Sollwerte einstellen, welche der Regelung des Massestroms in der Heizwasserleitung 16 zugrunde liegen.

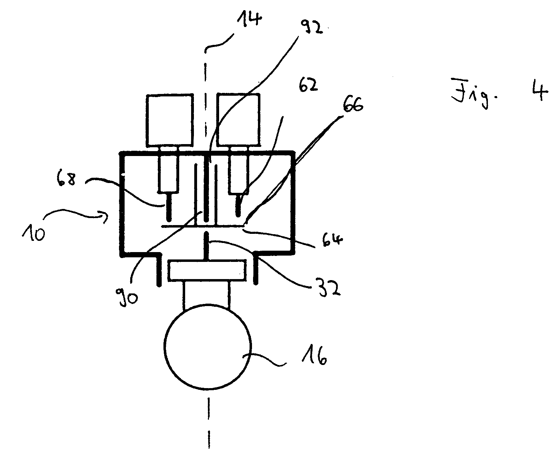

Es kann auch vorgesehen sein (Fig. 3), daß die Temperaturfühler 48 und 40 hydraulisch miteinander verbunden sind. Bei dieser Variante eines Ausführungsbeispieles weist das Thermostatventil 10 einen Ausdehnungskörper 88 auf, dessen Ausdehnung gemeinsam bestimmt wird durch die Wärmebeaufschlagung der Ausdehnungssubstanz mittels des Temperaturfühlers 48 und des Temperaturfühlers 40. Die Ausdehnungskraft, welche mittels des Ausdehnungskörpers 88 auf die Ventilspindel 36 und damit den Ventilkörper 32 übertragen wird, ist dann im wesentlichen die Ausdehnungskraft, welche durch den Temperaturfühler hervorgerufen wird, der eine stärkere Ausdehnung bewirkt.

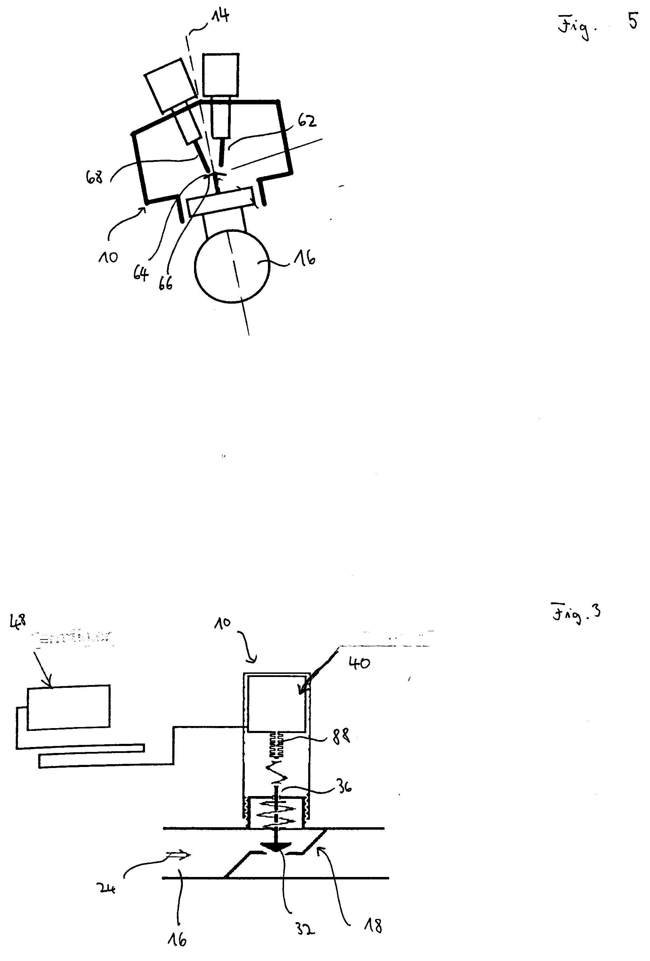

In einer Variante eines Ausführungsbeispieles (Fig. 4) weist der Stempel 66 eine Axialführung 90 auf, welche im Zentrum der Stempelbodens 64 so angeordnet ist, daß der Stempel an einer Achse 92, welche koaxial zur Achse 14 ist, verschieblich ist.

Es kann auch vorgesehen sein (Fig. 5), daß der erste Ausdehnungskörper 62 und der zweite Ausdehnungskörper 68 in einem Winkel zur Achse 14 angeordnet sind. Bevorzugterweise ist der Stempelboden 64 des Stempels 66 dann so ausgebildet, daß er eine erste Fläche aufweist, deren Flächennormale koaxial zur Kraftrichtung des ersten Ausdehnungskörpers 62 ist, und eine zweite Fläche aufweist, deren Flächennormale koaxial zur Kraftrichtung des zweiten Ausdehnungskörpers 68 ist.

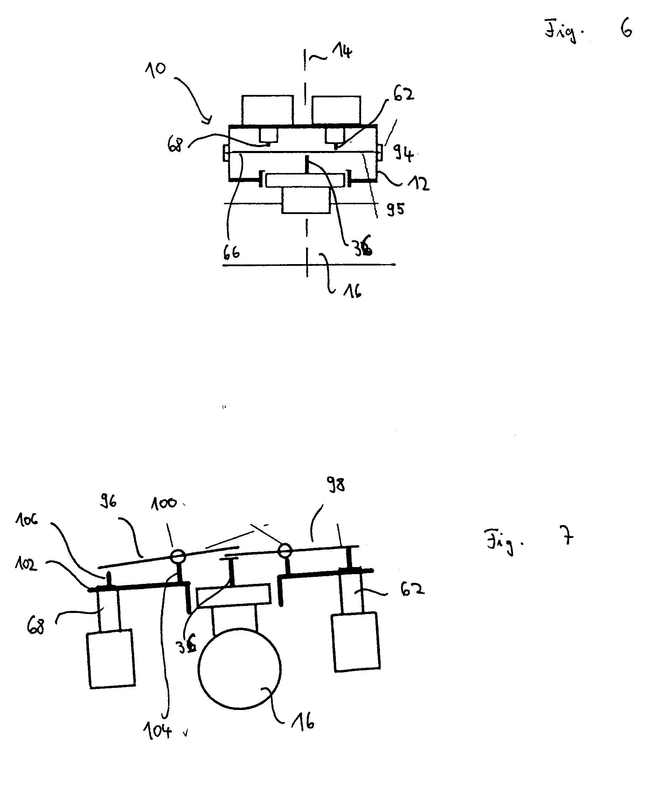

Bei einer Variante eines Ausführungsbeispieles (Fig. 6) ist das kraftübertragende Element von den Ausdehnungskörpern 62 und 68 auf die Ventilspindel 36 durch eine im Gehäuse 12 des Thermostatventils 10 an Lagern 94 drehbar gelagerte Platte 95 gebildet, wobei die Drehachse senkrecht zur Achse 14 verläuft, so daß die Platte 95 durch den ersten Ausdehnungskörper 62 oder den zweiten Ausdehnungskörper 68 ein Drehmoment erfahren kann, durch welches eine Kraft mittels eines Übertragungselementes (in Fig. 6 nicht gezeigt) auf die Ventilspindel 36 übertragbar ist.

Es kann auch vorgesehen sein (Fig. 7), daß die Kraft von dem ersten bzw. zweiten Ausdehnungskörper 62 bzw. 68 auf die Ventilspindel 36 mittels dem ersten Ausdehnungskörper 62 und dem zweiten Ausdehnungskörper 68 jeweilig zugeordneten Hebeln 96 bzw. 98 übertragen wird. Solche Hebel 96 bzw. 98 weisen Lager 100 auf, in welchem die Hebel drehbar gelagert sind. Die Ausdehnungskörper 68 bzw. 62 üben eine Kraft auf ein kraftübertragendes Element 102 auf, welches mittels eines Stützstiftes 104 in dem Lager 100 abgestützt ist Mittels eines Stiftes 106, dessen dem Hebel 96 zugewandtes Ende einen Abstand zum Lager 100 des Hebels aufweist, wird ein Drehmoment auf den Hebel übertragen. Durch dieses Drehmoment wird durch ein Ende des Hebels, welches dem Ende, durch welches die Kraft des Ausdehnungskörpers 68 bzw. 62 übertragen wird, abgewandt ist, eine Kraft auf die Ventilspindel 36 ausgeübt.

Eine Regelung des Heizwasser-Massestroms kann auch durch ein Thermostatventil mit elektronischem Stellantrieb erreicht werden (in der Fig. nicht gezeigt). Bei solch einem elektronischem Thermostatventil liegt der Bewegung des Ventilkörpers ein Temperatursignal eines beispielsweise elektronischen Signals eines Temperaturfühlers zugrunde. Es ist dann vorgesehen, daß ein erster Temperaturfühler für den Heizungsrücklauf und ein zweiter Temperaturfühler für den Heizungsvorlauf vorhanden ist, wobei durch eine elektronische Verarbeitungseinheit dem Stellantrieb ein Signal zugeführt wird, daß durch die Verknüpfung des Temperatursignals des ersten Temperaturfühlers und des Temperatursignals des zweiten Temperaturfühlers erzeugt wird. Beispielsweise kann eine Stellbewegung so gesteuert werden, wie sie sich als Summe aus einer Stellbewegung, welche allein durch das erste Temperatursignal entstehen würde und allein durch das zweite Temperatursignal entstehen würde, ergeben. Diese Art der Verknüpfung der Temperatursignale entspricht der in Fig. 1 gezeigten Variante eines Ausführungsbeispiels der erfindungsgemäßen Vorrichtung als mechanisches Analogon.

Es kann auch vorgesehen sein, daß die Verarbeitungseinheit die Stellbewegung so steuert, daß ein Temperatursignal des ersten oder zweiten Temperaturfühlers bevorzugt verwendet wird. Dies entspricht der in Fig. 2 gezeigten Variante einer Ausführungsform einer erfindungsgemäßen Vorrichtung als mechanisches Analogon.

Ein erfindungsgemäßes Thermostatventil arbeitet wie folgt:

Die Heizungsvorlauftemperatur wird durch eine Steuervorrichtung (in der Fig. nicht gezeigt) als Funktion der Außentemperatur eingestellt. Das erfindungsgemäße Thermostatventil regelt die Raumtemperatur eines durch einen oder mehrere Heizkörper beheizten Raums, indem es den Massestrom an Heizwasser durch den oder die Heizkörper mit Hilfe einer Ermittlung der aktuellen Raumtemperatur steuert, so daß der beheizte Raum eine im wesentlichen konstante Raumlufttemperatur aufweist.

Beispielsweise während oder kurz nach Lüften des Raums, wodurch die Raumtemperatur absinkt, öffnet sich das Thermostatventil, um dieser Temperaturabsenkung entgegenzuwirken. Dadurch steigt, nachdem der Heizkörper sich mit Warmwasser gefüllt hat, die Rücklauftemperatur des Heizwassers an, was für die Nutzung der latenten Wärme des Abgases des Brenners der Heizungsanlage unerwünscht ist.

Der zweite Temperaturfühler des erfindungsgemäßen Thermostatventils, welche die Rücklauftemperatur überwacht, sorgt dann dafür, daß der Massestrom an Heizwasser durch den oder die Heizkörper verringert wird, wodurch ein Anstieg der Rücklauftemperatur vermieden wird. Der oder die Heizkörper geben auch bei verringertem Massestrom genügend Wärme ab, da sie mit heißem Wasser gefüllt sind.

Der Massestrom wird erst dann wieder erhöht, wenn die Rücklauftemperatur absinkt. Nach Ende der Lüftungsperiode stellt sich allmählich wieder ein stationäres Fließgleichgewicht ein, bei dem die Rücklauftemperatur im wesentlichen konstant ist und der Massestrom des Heizwassers im wesentlichen mittels des Temperaturfühlers für die Raumlufttemperatur gesteuert wird.

## Patentansprüche

1. Thermostatventil zur Regelung des Massestroms in einem Heizkreis, der einen Heizungsvorlauf und einen Heizungsrücklauf aufweist, welches einen Ventilkörper umfaßt, der zur Steuerung des Massestroms in einer axialen Richtung beweglich ist,
**dadurch gekennzeichnet**, daß ein erster Temperaturfühler (40) für die Raumtemperatur eines zu beheizenden Raums und ein zweiter Temperaturfühler (48) für den Heizungsrücklauf vorgesehen sind und daß durch die gemeinsame Signalbeaufschlagung eines Ventilkörper-Steuerungsmittels durch den ersten und den zweiten Temperaturfühler (40; 48) die Bewegung des Ventilkörpers (32) steuerbar ist.

2. Thermostatventil nach Anspruch 1, dadurch gekennzeichnet, daß der Temperaturfühler (48) für den Heizungsrücklauf ein Fernfühler ist.

3. Thermostatventil nach Anspruch 1 oder 2, dadurch gekennzeichnet, daß der Temperaturfühler (40) für die Raumtemperatur ein Direktfühler oder ein Fernfühler ist.

4. Thermostatventil nach einem der voranstehenden Ansprüche, dadurch gekennzeichnet, daß das Ventilkörper-Steuerungsmittel ein thermisches Ausdehnungselement (37) ist, welches durch den ersten und den zweiten Temperaturfühler (40; 48) mit Wärme beaufschlagt wird.

5. Thermostatventil nach einem der voranstehenden Ansprüche, dadurch gekennzeichnet, daß das thermische Ausdehnungselement (37) einen ersten Ausdehnungskörper (42; 62) umfaßt, welcher mit dem ersten Temperaturfühler (40) verbunden ist, und einen zweiten Ausdehnungskörper (46; 68) umfaßt, der mit dem zweiten Temperaturfühler (48) verbunden ist.

6. Thermostatventil nach Anspruch 5, dadurch gekennzeichnet, daß der erste und der zweite Ausdehnungskörper (42; 46) so angeordnet sind, daß der Effekt der Wärmebeaufschlagung des thermischen Ausdehnungselements (37) durch den ersten Temperaturfühler (40) und der Effekt der Wärmebeaufschlagung des thermischen Ausdehnungselements (37) durch den zweiten Temperaturfühler (48) für die Bewegung des Ventilkörpers (32) additiv ist.

7. Thermostatventil nach Anspruch 6, dadurch gekennzeichnet, daß der erste Ausdehnungskörper (42) und der zweite Ausdehnungskörper (46) in Reihe hintereinander angeordnet sind.

8. Thermostatventil nach Anspruch 7, dadurch gekennzeichnet, daß zwischen dem ersten Ausdehnungskörper (42) und dem zweiten Ausdehnungskörper (46) ein kraftübertragendes Element (44) sitzt.

9. Thermostatventil nach Anspruch 8, dadurch gekennzeichnet, daß das kraftübertragende Element (44) eine Feder ist.

10. Thermostatventil nach Anspruch 5, dadurch gekennzeichnet, daß die Bewegung des Ventilkörperses (32) durch denjenigen Ausdehnungskörper (62; 68), welcher eine stärkere Ausdehnungskraft erzeugt, steuerbar ist.

11. Thermostatventil nach Anspruch 10, dadurch gekennzeichnet, daß ein kraftübertragendes Mittel (66, 78; 95; 96) von dem thermischen Ausdehnungselement (37) auf den Ventilkörper (32) vorgesehen ist.

12. Thermostatventil nach Anspruch 11, dadurch gekennzeichnet, daß das kraftübertragende Mittel einen verschieblichen Stempel (66) umfaßt, auf dessen Stempelboden (64) durch den ersten und den zweiten Ausdehnungskörper (62; 68) eine Kraft ausübbar ist.

13. Thermostatventil nach Anspruch 12, dadurch gekennzeichnet, daß der Stempel (66) in seinem Zentrum eine Axialführung (90) aufweist.

14. Thermostatventil nach Anspruch 12, dadurch gekennzeichnet, daß der Stempel (66) eine Axialführung (74; 70) in einem Umfangsbereich seines Stempelbodens (64) aufweist.

15. Thermostatventil nach einem der Ansprüche 10 bis 14, dadurch gekennzeichnet, daß der erste Ausdehnungskörper (62) und der zweite Ausdehnungskörper (68) mit ihrer hauptsächlichen Ausdehnungsrichtung jeweils einen Winkel zu einer Achse (14) bilden, welche in Bewegungsrichtung des Ventilkörpers (32) liegt.

16. Thermostatventil nach Anspruch 11, dadurch gekennzeichnet, daß das kraftübertragende Mittel eine drehbar gelagerte Platte 95 ist, durch welche die axiale Bewegung des Ventilkörpers (32) mittels eines durch den ersten oder zweiten Ausdehnungskörper (62; 68) hervorgerufenen Drehmoments der Platte (95) bewirkbar ist.

17. Thermostatventil nach Anspruch 11, dadurch gekennzeichnet, daß die Kraftübertragung von dem ersten und dem zweiten Ausdehnungskörper (62; 68) auf den Ventilkörper (32) jeweils mittels eines Hebels (96) erfolgt.

18. Thermostatventil nach einem der Ansprüche 1 bis 4, dadurch gekennzeichnet, daß der erste und der zweite Temperaturfühler (40; 48) hydraulisch miteinander verbunden sind.

19. Thermostatventil nach Anspruch 18, dadurch gekennzeichnet, daß ein thermischer Ausdehnungskörper (88) vorgesehen ist, der mit den hydraulisch verbundenen Temperaturfühlern (48; 40) in Verbindung steht, und durch dessen thermische Ausdehnung eine axiale Bewegung des Ventilkörpers (32) bewirkbar ist.

20. Thermostatventil nach einem der Ansprüche 1 bis 3, dadurch gekennzeichnet, daß das Ventilkörper-Steuerungsmittel eine elektronische Verarbeitungseinheit ist, welche die axiale Bewegung des Ventilkörpers (32) mit Hilfe von elektronischen Signalen des ersten und des zweiten Temperaturfühlers steuert.
